# EUROPEAN PATENT APPLICATION

(11) **EP 2 489 274 A1**
(43) Date of publication of application: **22.08.2012**
(21) Application number: 11154549.7
(22) Date of filing: 15.02.2011
(51) Int. Cl.: A22C 11/10, A22C 11/02

(54) **Clipping machine and control method for loosely filled products**

(71) Applicant: Poly-clip System GmbH & Co. KG, 60489 Frankfurt am Main (DE)
(72) Inventor: Mysker, Tom, Twin Lakes WI 53181 (US); Hillefeld, Rolf, 35428 Langgöns (DE)
(74) Representative: Eisenführ, Speiser & Partner

(57) **Abstract**

The present invention relates to a clipping machine and a method for controlling a clipping machine for producing sausage-shaped products (P) of a constant length loosely filled, containing a flowable filling material, like sausage meat, in a tubular casing material (M). The clipping machine (C) comprises a filling tube (10) having a central axis (A), for feeding a filling material, like sausage meat, into a tubular casing (M) provided on the filling tube (10), a displacer arrangement (30) having a first and a second displacer unit (32, 34) for gathering the filled tubular casing (M) and for providing a plait-like portion which is approximately free from filling material, wherein at least the first displacer unit (32) is reversibly movable relative to the second displacer unit (34) along the central axis (A) of the filling tube (10) in order to form an elongated plait-like portion, a clipping device (40) for applying at least one closure means (CC), like a closure clip, to the plait-like portion, for closing at least the just filled tubular casing (M), a sensing device (S) for sensing the actually filled casing section in order to detect the length of said just filled tubular casing (M), and a control unit for controlling the clipping machine (C). The control unit is adapted to control at least the movement of at least the first displacer unit (32) in a direction along the central axis (A) of the filling tube (10) relative to the second displacer unit (34) on the basis of a signal provided by the sensing device (S) and corresponding to the length of the just filled tubular casing (M).

## Description

The present invention relates to a clipping machine for producing sausage-shaped products according to claim 1 as well as a method for controlling a clipping machine according to claim 8.

In particular, the present invention relates, besides the method for controlling a clipping machine, to a clipping machine for producing sausage-shaped products of a constant length loosely filled, containing a flowable filling material, like sausage meat, in a tubular casing material. The clipping machine comprises a filling tube having a central axis, for feeding a filling material, like sausage meat, into a tubular casing provided on the filling tube, a displacer arrangement having a first and a second displacer unit for gathering the filled tubular casing and for providing a plait-like portion which is approximately free from filling material, wherein at least the first displacer unit is reversibly movable relative to the second displacer unit along the central axis of the filling tube in order to form an elongated plait-like portion. The clipping machine further comprises a clipping device for applying at least one closure means, like a closure clip, to the plait-like portion, in order to close at least the just filled tubular casing, a sensing device for sensing the actually filled casing section in order to detect the length of said just filled tubular casing, and a control unit for controlling the clipping machine.

In practice, it is known that, for example in the production of sausage-shaped products, like sausages, filling material is fed by a filling machine through a filling tube of a clipping machine into a tubular casing material which is stored on the filling tube and which is closed at its front end, i.e. the end pointing in the feeding direction of the filling material by a closing clip. The tubular casing material is pulled off from the filling tube while being filled by the feeding pressure. After a predetermined volume of filling material has been filled into said tubular casing material, a displacer arrangement with a first and a second displacer unit which can each be formed by a pair of reversibly moveable displacement elements shapes a plait-like portion of the tubular casing material. The clipping machine then places and closes at least one closing clip at the plait-like portion forming the rear end of the sausage shaped product, i.e. the end pointing against the feeding direction by respective closing tools which are reversibly movable towards the plait-like portion.

A clipping machine of this known type is disclosed in DE patent 26 60 854. For producing sausages of a constant length, this known machine includes a switch positioned downstream the filling tube and at a distance therefrom, which corresponds to the length of the sausage to be produced. While filling the filling material into the tubular casing, the front end of the tubular casing just filled is moved towards said switch. By reaching and thus activating the switch, the feeding process is stopped and the closing procedure is started.

From EP patent 1 967 073, a clipping machine for producing loosely filled sausage-shaped products is known. The clipping machine includes two pairs of displacer elements. After a predetermined volume of filling material is filled into the tubular casing, an elongated plait-like portion is produced by moving reversibly away the second pair of displacer elements from the first pair of displacer elements along the longitudinal axis of the filling tube about a predetermined length. Thereby, additional tubular casing is pulled off from the filling tube. Thereafter, two closure clips are applied to the plait-like portion, one for closing the rear end of the just filled tubular casing and a second for closing the front end of the tubular casing provided on the filling tube.

Loosely filled sausage-shaped products, like sausages, on the one hand, are produced to be brought into a shape different from the commonly known round cross-section, e.g. into a rectangular cross-section. On the other hand, also the rear and front ends of a loosely filled sausage-shaped product may be formed to be more rectangular in order to reduce the waste occurring by a reduced diameter of said ends causing e.g. sausage slides of a reduced diameter. For forming such e.g. rectangular sausages, loosely filled sausages are placed in a respective forming box. Thus, the loosely filled sausages must have a length and a filling degree which correspond to said forming box.

When filling a tubular casing up to a predetermined length and forming a plait-like portion by moving the displacer units away from each other about a constant length, the overall length of said loosely filled sausage-shaped product may vary due to the compression characteristics of the filling material and the elastic characteristics of the casing material. As a result, a sausage product being to short or having a larger diameter as intended can be produced, and thus, an incorrect cross-section. In case that a loosely filled sausage of a larger length is produced, the casing material may project from the forming box or overlap an edge of said forming box which then may not correctly be closed, whereby the sausage will have an incorrect, e.g. not constant cross-section.

It is an object of the present invention to provide a clipping machine and a method for controlling a clipping machine for producing loosely filled sausage-shaped products, with which the above mentioned drawbacks may be overcome, and with which sausage-shaped products of a constant length and constant weight may be produced.

The aforesaid object with regard to the clipping machine is achieved by the features of claim 1. Advantageous configurations of the clipping machine are described in claims 2 to 6. The aforesaid object with regard to the method for controlling the clipping machine is achieved by the features of claim 7. Advantageous method steps are described in claims 8 to 11.

According to the present invention, there is provided a clipping machine for producing sausage-shaped products of a constant length loosely filled, containing a flowable filling material, like sausage meat, in a tubular casing material. The clipping machine comprises a filling tube having a central axis, for feeding a filling material, like sausage meat, into a tubular casing provided on the filling tube, a displacer arrangement having a first and a second displacer unit for gathering the filled tubular casing and for providing a plait-like portion which is approximately free from filling material, wherein at least the first displacer unit is reversibly movable relative to the second displacer unit along the central axis of the filling tube in order to form an elongated plait-like portion. The clipping machine further comprises a clipping device for applying at least one closure means, like a closure clip, to the plait-like portion in order to close at least the just filled tubular casing, a sensing device for sensing the actually filled casing section in order to detect the length of said just filled tubular casing, and a control unit for controlling the clipping machine.

In the clipping machine according to the present invention, the control unit is adapted to control at least the movement of at least the first displacer unit in a direction along the central axis of the filling tube relative to the second displacer unit on the basis of a signal provided by the sensing device and corresponding to the length of the just filled tubular casing. In this configuration, by controlling the movement of at least the first displacer unit, the length of the moving path of the at least first displacer unit may be adjusted individually for each produced sausage-shaped product. Thus, when filling a predetermined portion of filling material into the tubular casing, the overall length and thereby the filling degree of the loosely filled sausage-shaped product may be maintained constant, independent from the characteristics of the casing material or the filling material.

In an advantage embodiment of the inventive clipping machine, the control unit is adapted to vary the length of the moving path of at least the first displacer unit along the central axis of the filling tube dependent on the signal provided by the sensing device. In case of compressive filling material, it is possible to increase individually for each produced sausage-shaped product the length of the moving path of at least the first displacer unit, whereby sausage-shaped products of a predetermined overall length may be produced.

In a further advantage embodiment, at least the first displacer unit includes a drive and, dependent on the signal provided by the sensing device, the control unit acts on said drive for controlling the movement of at least the first displacer unit for adapting the length of the moving path of at least the first displacer unit. By acting on said drive of the displacer unit, the control unit may increase or reduce e.g. the drive speed constantly or stepwise and in an accurate manner. Additionally, said drive is immediately stopped when the sausage-shaped product has reached the predetermined overall length, which may be derived from the signal of the sensing device.

In order to avoid damages to the sausage-shaped product, and to allow a constant product flow, a transportation device is provided downstream the displacer arrangement, for discharging the sausage-shaped product just produced out of the clipping machine. To avoid slippage between the sausage-shaped product and the transportation device, the speed of said transportation device, which can be a band-conveyor, may be adapted to the production speed, e.g. the volume follow of the filling material.

As mentioned above, at least the first displacer unit is movable in the direction of the central axis of the filling tube relative to the second displacer unit. Said displacer units may be of different configuration. In a preferred embodiment of the present invention, the first and second displacer units comprise first and second pairs of displacer elements. Said displacer elements may have the form of so-called displacer shears, wherein the displacer shears of each pair of displacer elements are movable towards each other about a common pivot axis. Alternatively, the displacer units may also be formed by iris displacers or linearly movable displacer elements comprising V-shaped recesses for gathering the filled tubular casing.

It is further advantageous that the sensing device comprises a sensing element for detecting the front end of the just filled tubular casing, positioned at a predetermined distance relative to the closure means. The predetermined distance between the sensing element and the closure means, in particular the closing tool closing the closure clip at the rear end of the sausage-shaped product corresponds to the overall length of the loosely filled sausage-shaped product. The front end of the sausage-shaped product may reliably be detected by said sensing device and a clip may be applied to the plait-like portion, whereby products of a constant overall length are produced. Alternatively, the sensing element may also detect the end of the sausage-shaped product at a predetermined distance before the intended overall length of the sausage-shaped product. It is further possible to derive a control signal regarding the length of the sausage-shaped product form the transportation device.

It is further advantageous, that the control unit is adapted to receive a signal corresponding to the volume of filling material filled in the just produced sausage-shaped product and is adapted to stop the filling process if a predetermined value for the volume of the filling material has been reached. The signal for the volume of filling material filled in the sausage-shaped product just produced can be derived by a sensor provided separately and/or by the filling machine. Moreover, the predetermined value can be changed. Furthermore, several values for different types of sausage-shaped products can further be stored in a database provided in the clipping machine.

According to the present invention, there is further provided a method for controlling a clipping machine for producing sausage-shaped products of a constant length loosely filled, containing a flowable filling material, like sausage meat, in a tubular casing material, comprising the steps of:
- feeding the filling material into the tubular casing material stored on a filling tube, having a central axis, and being closed at the front end by a closure clip, thereby forming a chubby filled tubular casing section;
- gathering the just filled tubular casing after a predetermined portion of filling material has been fed into said tubular casing, by first and second displacer units of a displacer arrangement;
- forming an elongated plait-like portion to the just filled tubular casing by moving at least the first displacer unit relative to the second displacer unit in a direction along the central axis of the filling tube;
- sensing the just filled tubular casing by a sensing device in order to detect the actual length of said just filled tubular casing;
- controlling at least the movement of at least the first displacer unit along the central axis of the filling tube by a control unit, on the basis of a signal provided to the control unit by the sensing device;
- placing and closing at least one closure clip on the back end of the just filled tubular casing by a clipping device; and
- discharging the loosely filled sausage-shaped product out of the clipping machine.

Furthermore, according to the inventive method, the control unit varies the length of the moving path of at least the first displacer along the central axis of the filling tube on the basis of the signal received from the sensing device.

In an advantageous method step, the moving path of the first displacer unit along the central axis of the filling tube may be shortened, extended or maintained constant according to the signal of the sensing device.

Moreover, the length of the moving path of the at least first displacer unit along the central axis of the filling tube may be varied each time after a loose filed sausage-shaped product has been produced.

In accordance with the inventive method, threshold values for at least the maximum and/or minimum length of the moving path of the at least first displacer unit along the central axis of the filling tube are provided, according to the kind of sausage-shaped product to be produced.

In an advantageous method step, the control unit of the clipping machine receives a signal corresponding to the volume of filling material filled in the tubular casing and interrupts the filling process if a predetermined value for the volume of the filling material has been reached.

Moreover, the method for controlling a clipping machine according to the present invention provides the same advantages as explained in conjunction with the inventive clipping machine.

Further advantages and preferred embodiments will be described in the following together with the drawings listed below. The expressions "left", "right", "below" and "above" used in the following description, are referred to the drawings in an alignment such that the reference numbers and the notation of the Figs. used can be read in normal orientation.

In the drawings:
- Fig. 1:: is a schematic view to the clipping machine according to the present invention, wherein the tubular casing is filled and gathered; and
- Fig. 2:: is a schematic view to the clipping machine according to Fig. 1, wherein an elongated plait-like portion is formed and the second closure clip for closing the just filled tubular casing is applied to the plait-like portion.

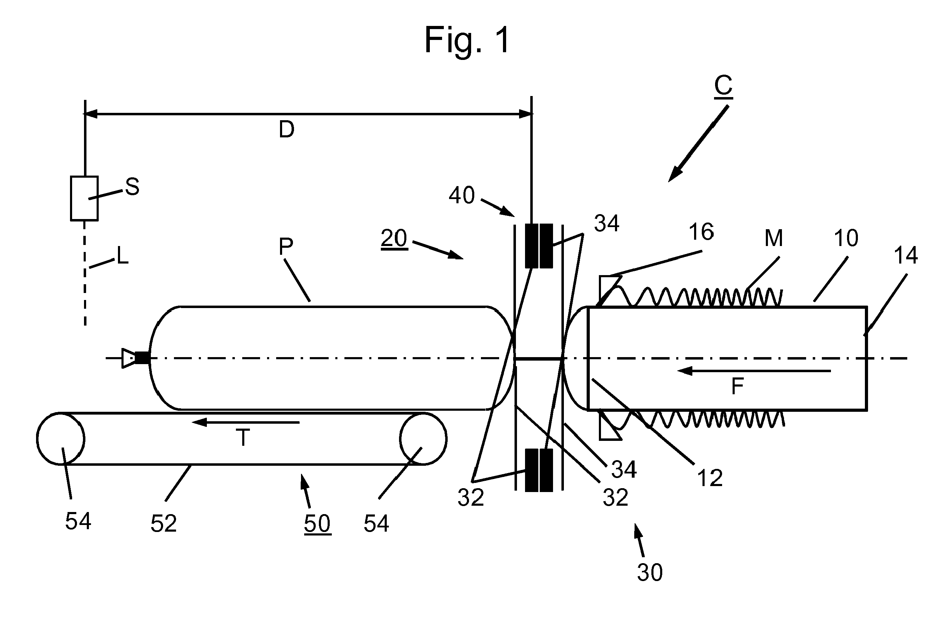

The clipping machine C for producing sausage-shaped products according to Fig. 1, comprises as main components a circular cylindrical filling tube 10 having a longitudinally extending central axis A and being made of stainless steel, wherein tubular casing material M made of a thin sheet material is stored on the filling tube 10, and a clipping device 20 arranged downstream filling tube 10 for closing the filled tubular casing material M. Furthermore, a transportation device 50 in the form of a belt conveyor is positioned downstream clipping device 20.

As it can be inferred from Fig. 1, horizontally arranged filling tube 10 has a left end 12 facing clipping device 20 and a right end 14 coupled to a filler arrangement (not shown in Fig. 1) including a pump for feeding filling material through filling tube 10 in a feeding direction F. A casing brake device 16 is arranged on filling tube 10 in order to control the movement of casing material M when pulled off from filling tube 10 by the filling pressure.

Positioned immediately downstream left end 12 of filling tube 10, clipping device 20 is arranged and coaxially aligned to filling tube 10, comprising a displacer arrangement 30 and a clipping arrangement 40. Displacer arrangement 30 includes a first displacer unit 32 and a second displacer unit 34, wherein first displacer unit 32 is positioned downstream second displacer unit 34. Between first and second displacer units 32, 34, clipping arrangement 40 is positioned, including a first and a second pair of clipping tools 42, 44, wherein each pair of clipping tool includes a punch and a die.

Further downstream clipping device 20, transportation device or belt conveyor 50 is arranged, comprising a conveyor belt 52 and guide rollers 54. Transportation direction T of belt conveyor 50 coincides with feeding direction F. The height of the upper conveyor belt section of conveyor belt 52 is aligned to the lower side of the sausage shaped product P to be produced.

A sensing device S includes a light source, e.g. a laser light source, for emitting a light beam L. Sensing device S is mounted at a position downstream clipping device 20 and in a predetermined distance D from first pair of clipping tools 42. Light beam L of sensing device S is directed to the pathway of the sausage-shaped product P to be produced, in order to detect sausage-shaped product P when engaging light beam L e.g. by its front end.

In Fig. 1, an intermediate production step is shown, wherein a predetermined portion of filling material is fed in feeding direction F through filling tube 10 into tubular casing M, whereby a chubby filled casing section is formed, and the filled casing material M is gathered by first and second displacer units 32, 34, which are radially moved toward central axis A of filling tube 10, thereby forming a short plait-like portion to the casing material M. First and second pair of closing tools 42, 44 are in a first position moved away from eachother.

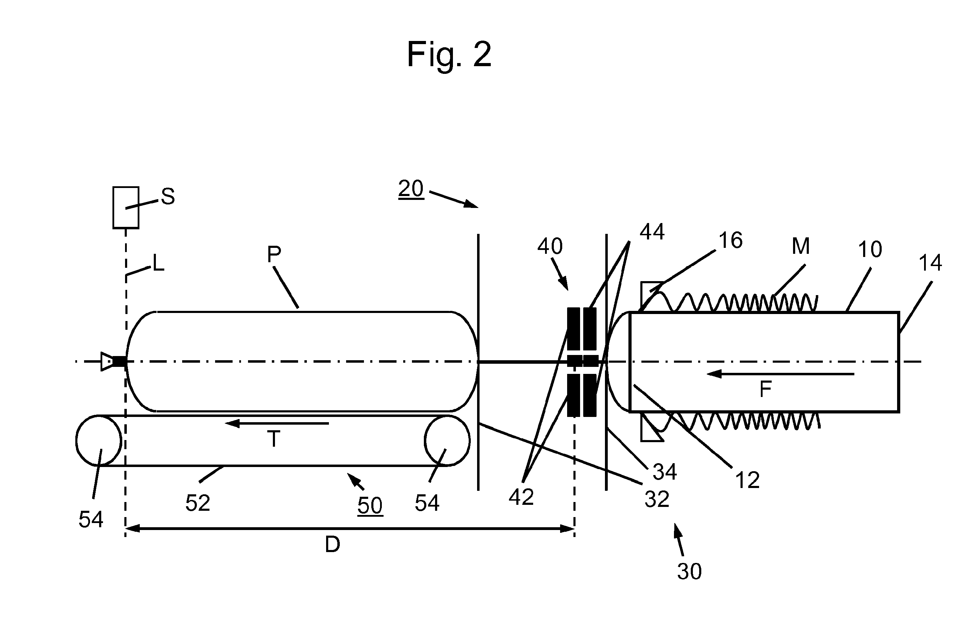

Fig. 2 shows the clipping machine C of Fig. 1 comprising the same components which are indicated by the same reference signs.

In the production step according to Fig. 2, first displacer unit 32 is moved away from second displacer unit 34 in the feeding direction F. The chubby filled casing section is, supported by belt conveyor 50, also shifted in the feeding direction. Thereby, additional casing material M is pulled off from filling tube 10, forming an elongated plait-like portion to which two closure clips CC are applied, a first in order to close the actually filled section of casing material M and a second in order to close the front end of casing material M provided on filling tube 10. First and second pairs of closing tools 42, 44 are in their second position close to the plait-like portion of casing material M for applying closure clips CC thereto.

Even if not shown, it has to be understood, that clipping machine C comprises a control unit for controlling the production of sausage shaped products P on clipping machine C, in particular for controlling the production steps and for intervening. e.g. in case of an accident or the like.

For producing sausage-shaped products P of a constant length and a constant filling degree, filling material is fed through filling tube 10 into tubular casing material M which is provided on filling tube 10, and which is closed at its front end by a closure clip CC, whereby casing material M is pulled off from filling tube 10 by the feeding pressure of the filing material. After a predetermined portion of filling material is fed into tubular casing material M, the feeding of filling material is stopped and first and second displacer units 32, 34 are activated for gathering the filled tubular casing M. That means that displacer units 32, 34 are moved from an open position (not shown) in a closed position as shown in Figs. 1 and 2. Displacer units 32, 34 conventionally comprise displacer elements. Thus, for moving displacer units 32, 34 from an open position into a closed position, said displacer elements of displacer units 32, 34 are radially moved towards central axis A of filling tube 10.

Thereafter, first displacer unit 32 together with the chubby filled casing portion positioned downstream first displacer unit 32 is shifted along central axis A in the feeding direction F, whereby additional casing material M is pulled off from filling tube 10 and an elongated plait-like portion is formed between first and second displacer units 32, 34. The chubby filled casing portion is supported by belt conveyor 50, which is driven at a speed corresponding to the advance of said chubby filled casing portion. For being driven at a respective speed, belt conveyor 50 comprises a drive, like an electric motor, which is coupled to the control unit of clipping machine C. In case that the advance of the sausage-shaped product P is not constant, e.g. at different production steps, also belt conveyor 50 may be driven at a non-constant speed.

During the movement of first displacer unit 32, the front end of the just filled casing P is detected by sensing device S. When the front end of the just filled casing P is detected by sensing device S, the movement of first displacer unit 32 is stopped and clipping arrangement 40 is activated. Two closure clips CC are applied to the plait-like portion by first and second pairs of clipping tools 42, 44. Simultaneously or afterwards, not shown cutting device cuts the plait-like portion between the two closure clips CC for separating the sausage-shaped product P just produced from the tubular casing material M remaining on filling tube 10. Thereafter, a further sausage-shaped product P may be produced, while the sausage-shaped product P just produced is discharged from clipping machine C by conveyor 50 and guided to a forming station, which may include a forming box for forming a sausage-shaped product of a specific cross-section.

Since sensing device S is mounted downstream clipping device 20 at a predetermined distance D from the first pair of closing tools 42, the overall length of the sausage-shaped product P just produced including the chubby filled casing portion and the elongated plait-like portion, corresponds to said distance D.

Depending on the characteristics of the filling material e.g. varying compressible features of the filling material, while a predetermined portion of said filling material is fed into casing material M forming said chubby filled casing section, the length of said chubby filled section may vary. Thus, by controlling the movement of the first displacer unit 32 on the basis of a signal from sensing device S, the length of the plait-like portion may vary, but the overall length of the sausage-shaped product maintains constant and, since a predetermined portion of filling material is filled in to said casing material M having a constant length, also the filling degree and the weight of the sausage-shaped products P maintains constant. Finally, the cross section of said sausage-shaped products P also maintains constant, which is a further advantage regarding the further treatment and the quality of said products P.

Additionally, for increasing the accuracy of the length, weight and/or the filling degree of the sausage-shaped product P, the control unit may comprise a storage device in which data regarding the characteristics of different filling materials and/or casing materials are stored. Said data may than be selected depending on the kind of sausage-shaped products P to be produced. On the basis of said data, a correction factor or a corrected length for the respective sausage-shaped products P may be calculated and included in to the control of e.g. the movement of at least the first displacer unit 32.

Alternatively, said data regarding the characteristics of different filling materials and/or casing materials, a correction factor or a corrected length may be manually provided to the control unit by the operator.

Displacer units 32, 34 shown in Fig. 1 and 2, may be of any suitable kind. They can be realized as iris displacers, shear displacers including displacer shears als the displacer elements, or linearly movable displacers including displacer elements having V-shaped recesses for gathering the filled tubular casing material M.

According to the embodiment of Figs. 1 and 2, only first displacer unit 32 is described as being movable relative to second displacer unit 34 along central axis A. It has to be understood that also second displacer unit 34 may be movable relative to first displacer unit 32, e.g. in a direction contrary to first displacer unit 32. In this case, first and second displacer units 32, 34 may comprise separate drives for separately moving first and second displacer units 32, 34 relative to eachother, controlled by the control unit on the basis of a signal received from sensing device S. It is also possible, to drive first and second displacer units 32, 34 by a common drive, which is than coupled to first and second displacer units 32, 34 by a respective rear or transmission for realizing the respective movement in the respective direction.

Sensing device S has been described as comprising a light source for emitting a light beam L, for detecting the front end of the just filled tubular casing P. Other sensing means, like a mechanical switch or an alternative radiation source may be used.

The position of sensing device S has been described as being in a predetermined distance D away from the first pair of closing tools 42. It has to be understood, that the position of sensing device may be adjusted, manually or automatically, according to the size of sausage-shaped products to be produced. For this adjustment, sensing devices S may be shifted along a guidance in the feeding direction F. Said guidance, together with sensing device S, may be provided as an upgrade to existing clipping machines including the respective displacer units.

Moreover, distance D may also be shorted than the overall length of the sausage-shaped product. The remaining length for reaching the intended overall length of the sausage-shaped product P may be a predetermined length, which allows a variation in the movement of the first displacer unit, like a degreasing advance speed. Additionally, said signal may be used e.g. for starting the clipping process by moving the clipping tools toward the plat-like portion.

Alternatively to sensing device S, a signal corresponding to the length of the just filled casing section for controlling the movement of at least the first displacer unit may also be derived from transportation device 50, e.g. on the basis of the speed and time.

Transportation device 50 not necessarily needs to be a belt conveyor including a drive. In an alternative embodiment, transportation device 50 may be realized by a column of freely rotatable separate rollers, which only support the casing material portion being just filled. Said rollers are than automatically driven by the advance of the casing material M while being filled.

## Claims

1. A clipping machine for producing sausage-shaped products (P) of a constant length loosely filled, containing a flowable filling material, like sausage meat, in a tubular casing material (M), comprising:
a filling tube (10) having a central axis (A), for feeding a filling material, like sausage meat, into a tubular casing (M) provided on the filling tube (10),
a displacer arrangement (30) having a first and a second displacer unit (32, 34) for gathering the filled tubular casing (M) and for providing a plait-like portion, which is approximately free from filling material, wherein at least the first displacer unit (32) is reversibly movable relative to the second displacer unit (34) along the central axis (A) of the filling tube (10) in order to form an elongated plait-like portion,
a clipping device (40) for applying at least one closure means (CC), like a closure clip, to the plait-like portion, in order to close at least the just filled tubular casing (M),
a sensing device (S) for sensing the actually filled casing section in order to detect the length of said just filled tubular casing (M), and
a control unit for controlling the clipping machine (C),
**characterized in that** the control unit is adapted to control at least the movement of at least the first displacer unit (32) in a direction along the central axis (A) of the filling tube (10) relative to the second displacer unit (34) on the basis of a signal provided by the sensing device (S) and corresponding to the length of the just filled tubular casing (M).

2. The clipping machine according to claim 1,
wherein the control unit is adapted to vary the length of the moving path of at least the first displacer unit (32) along the central axis (A) of the filling tube (10) dependent on the signal provided by the sensing device (S).

3. The clipping machine according to claims 1 or 2,
wherein at least the first displacer unit (32) includes a drive and, dependent on the signal provided by the sensing device (S), the control unit acts on said drive for controlling the movement of at least the first displacer unit (32).

4. The clipping machine according to any of claims 1 to 3,
wherein a transportation device (50) is provided downstream the displacer arrangement (30), for discharging the sausage-shaped product (P) just produced out of the clipping machine (C).

5. The clipping machine according to any of claims 1 to 4,
wherein the first and second displacer units (32, 34) comprise first and second pairs of displacer elements.

6. The clipping machine according to any of claims 1 to 5,
wherein the sensing device (S) comprises a sensing element for detecting the front end of the just filled tubular casing (M), positioned at a predetermined distance (D) relative to the closure means (CC).

7. The apparatus according to one of claims 1 to 6,
wherein the control unit is adapted to receive a signal corresponding to the volume of filling material filled in the just produced sausage-shaped product and is adapted to stop the filling process if a predetermined value for the volume of the filling material has been reached.

8. A method for controlling a clipping machine for producing sausage-shaped products (P) of a constant length loosely filled, containing a flowable filling material, like sausage meat, in a tubular casing material (M), comprising the steps of:
- feeding the filling material into the tubular casing material (M) stored on a filling tube (10), having a central axis (A), and being closed at the front end by closure means, like a closure clip (CC), thereby forming a chubby filled tubular casing section;
- gathering the just filled tubular casing (M) after a predetermined portion of filling material has been fed into said tubular casing (M), by first and second displacer units (32, 34) of a displacer arrangement (30);
- forming an elongated plait-like portion to the just filled tubular casing (M) by moving at least the first displacer unit (32) relative to the second displacer unit (34) in a direction along the central axis (A) of the filling tube (10);
- sensing the just filled tubular casing (M) by a sensing device (S) in order to detect the actual length of said just filled tubular casing (M);
- controlling at least the movement of at least the first displacer unit (32) along the central axis (A) of the filling tube (10) by a control unit, on the basis of a signal provided to the control unit by the sensing device (S);
- placing and closing at least one closure clip (CC) on the rear end of the just filled tubular casing (M) by a clipping device (40); and
- discharging the loose filled sausage-shaped product (P) out of the clipping machine (C).

9. The method according to claim 8,
wherein the control unit varies the length of the moving path of at least the first displacer unit (32) along the central axis of the filling tube on the basis of the signal received from the sensing device (S).

10. The method according to claims 8 or 9,
wherein the moving path of the first displacer unit (32) along the central axis of the filling tube may be shortened, extended or maintained constant according to the signal of the sensing device (S).

11. The method according to any of claims 8 to 10,
wherein the length of the moving path of the at least first displacer unit (32) along the central axis of the filling tube may be varied each time after a loose filed sausage-shaped product (P) has been produced.

12. The method according to any of claims 8 to 11,
wherein threshold values for at least the maximum and/or minimum length of the moving path of the at least first displacer unit (32) along the central axis of the filling tube are provided, according to the kind of sausage-shaped product (P) to be produced.

13. The method according to any of claims 8 to 11,
wherein the control unit of the clipping machine receives a signal corresponding to the volume of filling material filled in the tubular casing and interrupts the filling process if a predetermined value for the volume of the filling material has been reached.
